# EUROPÄISCHE PATENTSCHRIFT

(11) **EP 1 747 869 B1**
(45) Veröffentlichungstag und Bekanntmachung des Hinweises auf die Patenterteilung: **01.10.2008**
(21) Anmeldenummer: 05016280.9
(22) Anmeldetag: 27.07.2005
(51) Int. Cl.: B29B 17/00

(54) **Verfahren und System zur Bestimmung von Materialart und -zustand eines Bauteils aus einem recycelbaren Material.**
Process and system for determining the kind and the state of the material of a mounting piece made from recyclable material,.
Procédé et système pour la détermination de l'état et du type d'un élément de construction en matière recyclable.

(43) Veröffentlichungstag der Anmeldung: 31.01.2007
(73) Patentinhaber: Universität Bremen, 28359 Bremen (DE); Bremer Institut für Angewandte Arbeitswissenschaft, 28359 Bremen (DE)
(72) Erfinder: Fikouras, Ioannis Dipl.-Inf., 27729 Hambergen (DE); Dörsch, Christian Dipl.-Ing., 28203 Bremen (DE); Krobjilowski, Andreas Dipl.-Ing., 50996 Köln (DE); Müller, Dieter H. Prof. Dr.-Ing., 28832 Achim (DE)
(74) Vertreter: Manasse, Uwe

(56) Entgegenhaltungen:
- EP-A- 1 462 349
- DE-A1- 19 836 969
- DE-U1- 8 913 610
- US-B1- 6 748 305

## Beschreibung

Die Erfindung betrifft ein Verfahren und System zur Bestimmung von Materialart und -zustand eines Bauteils aus einem recyclebaren Material, insbesondere aus einem polymerem Material, Polymergemisch, Copolymerisat, biologisch abbaubarem Polymerwerkstoff oder einem Werkstoff auf Basis von mindestens einem nachwachsenden Rohstoff, von einem Fahrzeug, Flugzeug oder Schiff.

Desweiteren betrifft die Erfindung ein Fahrzeug, insbesondere Kraftfahrzeug, Flugzeug oder Schiff.

Am Beispiel der derzeitigen Verwertung von Altautos soll das der Erfindung zugrundeliegende Problem geschildert werden. Die Verwertung von Altautos erfolgt momentan durch Schreddern und nachgeschaltetes Sortieren von Metallen und Nicht-Metallen. Die Metalle werden zumeist im Hochofenprozeß wieder verwertet. Aufgrund des hohen Aufwands einer vollständigen Sortierung der einzelnen Kunststoffe, die in einem Auto, häufig sogar vereint in einem Bauteil, verwendet werden, wird der Rest thermisch entsorgt. Nichtsdestotrotz steigt die in einem Auto verwendete Menge an Kunststoff jährlich. Im Jahre 1970 betrug sie durchschnittlich 6 %, im Jahre 2000 13 % und besonders leichte Autos, wie zum Beispiel der Audi A2, weisen bereits einen Anteil von 23,3 % auf.

Selbst wenn die Kunststoffe sortiert werden, führt dies üblicherweise zu Problemen bei der Verarbeitung und hat somit negative Einflüsse auf die Qualitätseigenschaften der mit Recyclingware hergestellten Produkte. Die Recyclingware ist nämlich meist undefiniert und besteht aus geschredderten Bauteilen unterschiedlicher Herkunft. Der Grundwerkstoff ist überwiegend sortenrein sortiert, zum Beispiel PP oder PC/ABS und so weiter. Aufgrund der unterschiedlichen Herkunft und der variierenden Umgebungsbedingungen während des Lebenszyklus kommt es jedoch zu großen Abweichungen hinsichtlich der Verarbeitungseigenschaften. Die Verarbeitungseigenschaften können zum Beispiel von der Schlagzähigkeit, Zugfestigkeit, Dehnung, Kriechdehnung, von der elektrischen Leitfähigkeit, Viskosität, Biegefestigkeit, vom Elastizitätsmodul, Biege-Elastizitätsmodul, von akustischen Eigenschaften, zum Beispiel Schallreflexion, elektrischen Eigenschaften, zum Beispiel dielektrische Polarisation, optischen Eigenschaften, zum Beispiel Reflexion, und thermischen Eigenschaften, zum Beispiel Wärmeleitfähigkeit abhängen bzw. diese bei dem resultierenden Produkt beeinflussen.

Die EP-A-1 462 349 beschreibt einen speziellen RFID-Tag und einen Container, der speziell für die Anbringung an Stahlchassis konzipiert ist und zur Identifizierung von Fahrzeugen dient. Der beschriebene Container soll eine sichere Identifizierung von Fahrzeugen erlauben durch Anbringung an Stellen, welche das Auslesen fehlerfrei ermöglichen.

DE 198 36 969 A1 beschreibt eine Vorrichtung zum Identifizieren von Fahrzeugen, die einen integrierten elektronischen Datenspeicher verwendet und gemeinsam mit einer Sende- und Empfangsantenne in einem abgedichteten Schutzbehälter eine Baueinheit bildet. Diese Baueinheit ist zur Anbringung an Rohbauteilen geeignet.

Die US-B1-6 748 305 offenbart ein zentrales Speichermedium, welches mit dem Datenbus eines Fahrzeugs verbunden wird, um Informationen während der Produktnutzungsphase permanent zu speichern.

Der Erfindung liegt somit die Aufgabe zugrunde, dafür zu sorgen, daß soviel wie möglich von recyclebaren Materialien, nicht nur bei Autos, wiederverwendet werden können.

Erfindungsgemäß wird diese Aufgabe durch ein Verfahren gemäß Anspruch 1 gelöst.

Die Information über den Materialzustand kann nicht nur zum Sortieren und Recyclen, sondern auch für Service- und Wartungsaufgaben verwendet werden. In vielen Fällen beinhaltet die Information über den Materialzustand implizit auch die Information über die Materialart.

Zumindest ein Teil der recyclebaren Materialien läßt sich unter den Begriff "Kunststoffe" fassen. Zu den recyclebaren Materialien können polymere Materialien mit Molekülkettenstruktur, vernetzt und unvernetzt, zum Beispiel amorphe und teilkristalline Thermoplaste, Duroplaste, Elastomere gezählt werden. Die polymeren Materialien können allgemein faserverstärkt sein, zum Beispiel Lang-/Kurzfasern, Natur- oder Industriefasern enthalten. Polymere Materialien können zum Beispiel mit Talkum, Holzfasern, Glasfaser etc. gefüllt sein. Biologisch abbaubare Polymerwerkstoffe können zum Beispiel Polyesteramide und aliphatische Polyester sein. Werkstoffe auf Basis eines nachwachsenden Rohstoffes können zum Beispiel Zucker, Cellulose, Lignine, Fette, Öle, Stärke etc. sein. Beispiele für Polymergemische und Copolymerisate stellen zum Beispiel Polycarbonat und ABS (Acryl-Butadien-Styrol) dar.

Weiterhin wird diese Aufgabe gelöst durch ein Fahrzeug, insbesondere Kraftfahrzeug, Flugzeug oder Schiff, umfassend: mindestens ein Bauteil aus einem recyclebarem Material, insbesondere aus einem polymerem Material, Polymergemisch, Copolymerisat, biologisch abbaubarem Polymerwerkstoff oder einem Werkstoff auf Basis von mindestens einem nachwachsenden Rohstoff, das mit einem Transponder mit einer beschreibbaren und auslesbaren Speichereinrichtung versehen ist, die Identifikationsdaten zur Identifizierung von genanntem Bauteil und/oder Materialart von genanntem Bauteil enthält, und mindestens eine Sensoreinrichtung zur Erfassung von mindestens einem der Parameter Feuchtigkeit, Temperatur oder UV-Licht während des Lebenszyklus von genanntem mindestens einen Bauteil, wobei genannter Transponder gestaltet ist, um von genannter mindestens einen Sensoreinrichtung über eine Kommunikationseinrichtung direkt oder indirekt Sensordaten zu empfangen.

Schließlich wird diese Aufgabe gelöst durch ein System zur Bestimmung von Materialart und -zustand von Bauteilen aus einem recyclebaren Material, insbesondere aus einem polymerem Material, Polymergemisch, Copolymerisat, biologisch abbaubarem Polymerwerkstoff oder einem Werkstoff auf Basis von mindestens einem nachwachsenden Rohstoff, von einem Fahrzeug, insbesondere Kraftfahrzeug, Flugzeug oder Schiff, umfassend: einen an einem Bauteil eines Fahrzeugs angebrachten Transponder mit einer beschreibbaren und auslesbaren Speichereinrichtung, die Identifikationsdaten zur Identifizierung von genanntem Bauteil und/oder Materialart von genanntem Bauteil enthält, mindestens eine an dem Fahrzeug vorgesehene Sensoreinrichtung zur Erfassung von mindestens einem der Parameter Feuchtigkeit, Temperatur oder UV-Licht während des Lebenszyklus von genanntem mindestens einen Bauteil, wobei genannter Transponder gestaltet ist, um von genannter mindestens einen Sensoreinrichtung über eine Kommunikationseinrichtung direkt oder indirekt Sensordaten zu empfangen, mindestens eine Ausleseeinrichtung zum drahtlosen Auslesen der Identifikationsdaten zum Identifizieren von einem Bauteil und/oder Materialart von genanntem Bauteil und der gegebenenfalls verarbeiteten Sensordaten aus genannter Speichereinrichtung, und mindestens eine mit genannter Ausleseeinrichtung in Verbindung stehende Materialzustandsbestimmungseinrichtung zum Bestimmen der Materialart und des Materialzustands von genanntem Bauteil unter Verwendung der von genannter Ausleseeinrichtung ausgelesenen Identifikations- und Sensordaten. Die Lebenszyklusdaten enthalten Informationen über mindestens einen der Parameter Temperatur, Feuchtigkeit und UV-Licht, der bzw. dem das Bauteil während seiner Nutzung bzw. seines Lebenszyklus ausgesetzt gewesen ist.

Bei dem Verfahren zur Bestimmung von Materialart und -zustand eines Bauteils kann vorgesehen sein, daß genannte Sensordaten in einer On-Board-Unit des Fahrzeugs zwischengespeichert und vor oder nach der Zwischenspeicherung verarbeitet werden sowie zeit-, ereignis- oder abfragegesteuert nachfolgend über genannte Kommunikationseinrichtung zu genanntem Transponder übertragen werden.

Andererseits ist auch denkbar, daß genannte Sensordaten direkt in genannter Speichereinrichtung von genanntem Transponder gespeichert und vor oder nach der Speicherung verarbeitet werden.

Insbesondere kann dabei vorgesehen sein, daß genannte Identifikationsdaten und genannte Sensordaten zeit-, ereignis- oder abfragegesteuert mittels der Ausleseeinrichtung ausgelesen werden.

Günstigerweise werden zum Bestimmen des Materialzustands von der Materialzustandsbestimmungseinrichtung zusätzlich Informationen über genanntes Bauteil und/oder Materialart von genanntem Bauteil von einer Datenbank abgefragt, in der genannte Informationen hinterlegt sind.

Weiterhin kann vorgesehen sein, daß genannter mindestens eine Parameter kontinuierlich oder zeit-, ereignis- oder abfragegesteuert erfaßt wird.

Die Unteransprüche 7 bis 13 betreffen weitere besondere Ausführunizsforinen des Verfahrens.

Bei dem Fahrzeug kann vorgesehen sein, daß eine On-Board-Unit vorgesehen ist, die gestaltet ist, um genannte Sensordaten zwischenzuspeichern und vor oder nach der Zwischenspeicherung zu verarbeiten sowie zeit-, ereignis- oder abfragegesteuert über genannte Kommunikationseinrichtung zu genanntem Transponder zu übertragen.

Insbesondere ist dabei denkbar, daß der Transponder gestaltet ist, um genannte Sensordaten direkt in genannter Speichereinrichtung von genanntem Transponder zu speichern und vor oder nach der Speicherung zu verarbeiten.

Günstigerweise ist genannte Sensoreinrichtung gestaltet, um genanten mindestens einen Parameter kontinuierlich oder zeit-, ereignis- oder abfragegesteuert zu erfassen.

Vorteilhafterweise ist bei dem System zur Bestimmung von Materialart und -zustand von Bauteilen genannte Ausleseeinrichtung gestaltet, um genannte Identifikations- und Sensordaten zeit-, ereignis- oder abfragegesteuert auszulesen.

Zweckmäßigerweise umfaßt das System eine Datenbank, in der Informationen über Bauteile und/oder Materialarten der Bauteile gespeichert sind sowie von der Materialzustandsbestimmungseinrichtung abfragbar sind.

Schließlich betreffen die Unteransprüche 21 bis 26 weitere besondere Ausführungsformen des Systems.

Der Erfindung liegt die überraschende Erkenntnis zugrunde, daß durch die Verwendung von Lebenszyklusdaten (Life-Cycle-Daten) von den Bauteilen, d. h. im vorliegenden Fall in erster Linie der Umgebungsbedingungen gegebenenfalls in Kombination mit Information über die Zeitdauer, während derer das Bauteil gewissen Umweltbedingungen ausgesetzt gewesen ist, und/oder des Zeitpunktes desselben während der Nutzungsphase der Bauteile, der Materialart und des Materialzustandes, zumindest der Materialzustand bestimmt werden kann und diese Information zum Sortieren und/oder Recyclen verwendet werden kann. Besagte Information kann zur Festlegung der weiteren Verarbeitung und/oder Rezeptur verwendet werden. Dadurch läßt sich soviel wie möglich von der "Altware" wiederverwenden. Dementsprechend kann der Einsatz von "Neuware" (neuem Material) reduziert werden. Anhand der Kenntnis des Materialzustands und gegebenenfalls weiterer Eigenschaften der Altware ergeben sich deren Einsatzbereiche und/oder Verarbeitungs-/Aufbereitungsschritte, wodurch sich Produkte mit definierter Qualität herstellen lassen. Die Altware kann der Neuware in bestimmten Anteilen wieder zugegeben werden, wodurch unter Umständen sogar höherwertigere, zumindest aber gleichwertige Produkte herstellbar sind, oder, wenn das bei hochwertigen Produkten nicht möglich ist, zu weniger anspruchsvollen Produkten verarbeitet werden.

Nach einer Demontage der Bauteile kann eine nachgeschaltete automatische Sortierung derselben erfolgen. Die Sortierung kann auf der Grundlage von aktuellen Produktlebenszyklus-Daten (Product Life-Cycle Recording) und von verschiedenen Herstellern in der Supply Chain (Supply Chain Recording) in einer gemeinsamen Datenbank hinterlegten Informationen über das Bauteil und/oder das Material des Bauteils erfolgen. Der Transponder (RFID-Label) dient als eine sogenannte PEID (Product Embedded Identification Device)-Komponente, die in der Sortieranlage ausgelesen wird.

Weitere Merkmale und Vorteile der Erfindung ergeben sich aus den Ansprüchen und der nachstehenden Beschreibung, in der mehrere Ausführungsbeispiele anhand der schematischen Zeichnungen im einzelnen erläutert sind. Dabei zeigt:
- Figur 1: eine Seitenansicht teilweise im Schnitt von dem vorderen Teil eines Fahrzeuges gemäß einer besonderen Ausführungsform der vorliegenden Erfindung;
- Figur 2: eine Seitenansicht teilweise im Schnitt von einem Fahrzeug gemäß einer weiteren besonderen Ausführungsform der Erfindung;
- Figur 3: ein System zur Bestimmung von Materialart und -zustand und zum Recyclen gemäß einer besonderen Ausführungsform der Erfindung;
- Figur 4: ein System zur Bestimmung von Materialart und -zustand und zum Recyclen gemäß einer weiteren besonderen Ausführungsform der vorliegenden Erfindung; und
- Figur 5: ein System zur Bestimmung von Materialart und -zustand und zum Recyclen gemäß einer weiteren besonderen Ausführungsform der vorliegenden Erfindung.

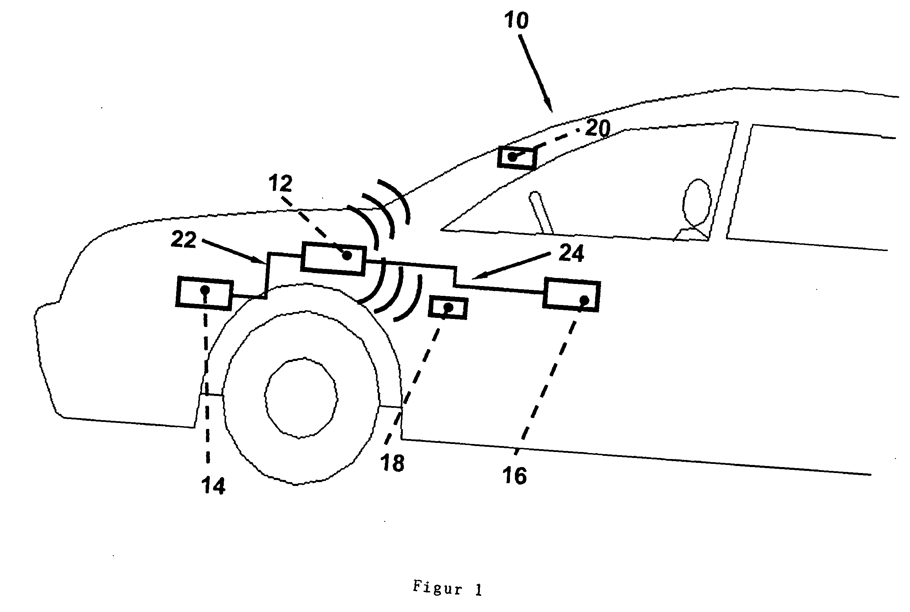

Figur 1 zeigt ein Fahrzeug 10, das eine On-Bord-Unit 12, zwei Sensoreinrichtungen 14 und 16 und zwei Bauteilen (nicht gezeigt) mit jeweils einem Transponder 18 bzw. 20 auf RFID-Basis umfaßt. Die Sensoreinrichtungen 14 und 16 erfassen beispielsweise jeweils die Temperatur und Feuchtigkeit. Diese Sensordaten werden über jeweilige Datenleitungen 22 und 24 an die On-Bord-Unit 12 weitergegeben. Selbstverständlich kann die Weitergabe der Sensordaten auch drahtlos erfolgen. Dort werden die Sensordaten gespeichert und vor oder nach der Speicherung verarbeitet. Beispielsweise werden die Sensordaten mit Zeitstempeln und allgemeinen Zeitangaben versehen. Die Erfassung von Temperatur und Feuchtigkeit kann kontinuierlich oder fortlaufend in festen Zeitintervallen erfolgen und es ist beispielsweise denkbar, daß lediglich Minimal- und/oder Maximalwerte gespeichert werden, wobei dies auch durch Überschreiben von vorangehend erfaßten Minimal- und/oder Maximalwerten erfolgen kann.

Bevor das Fahrzeug 10 verwertet wird, überträgt die On-Bord-Unit 12 drahtlos die zentral gespeicherten, gegebenenfalls verarbeiteten Sensordaten auf die Transponder 18 und 20. Im Rahmen der Verwertung des Fahrzeugs 10 werden die Bauteile mit den Transpondern demontiert und nachfolgend einer Ausleseeinrichtung (nicht gezeigt) zum Auslesen der Daten der Transponder zugeführt, wobei die ausgelesenen Daten Identifikationsdaten zur Identifizierung der Bauteile und der Materialart(en) der Bauteile und Lebenszyklusdaten, die zumindest die obengenannten Sensordaten umfassen, der Bauteile umfassen. Die Ausleseeinrichtung kann zum Beispiel Bestandteil einer Anlage zum Sortieren oder einer Anlage zum Recyclen sein.

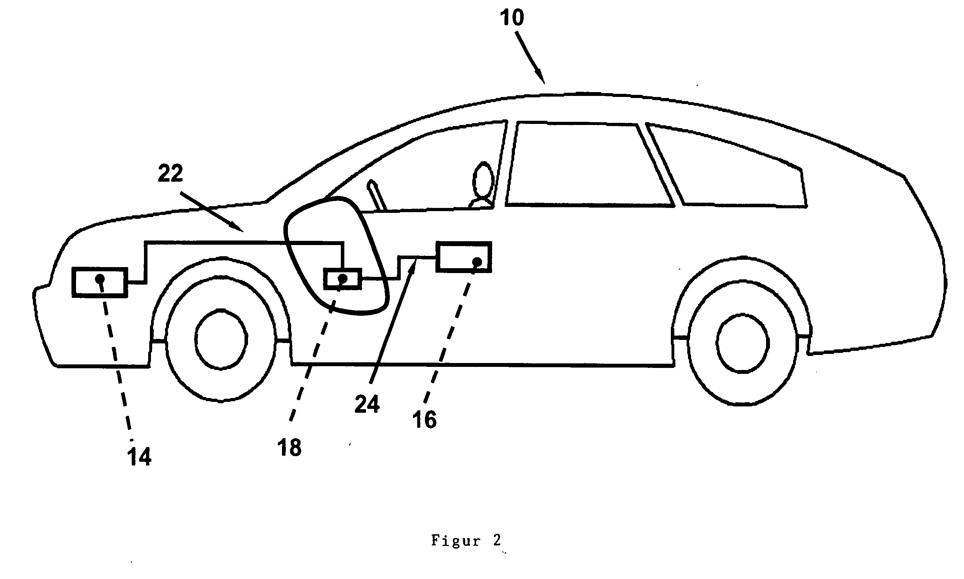

Das in Figur 2 gezeigte Fahrzeug 10 unterscheidet sich von dem in Figur 1 gezeigten Fahrzeug darin, daß die Sensoreinrichtungen 14 und 16 über die Datenleitungen 22 und 24 direkt mit einem Transponder 18, der in oder an einem Bauteil (nicht gezeigt) vorgesehen ist, verbunden sind. Dementsprechend erfolgt die Speicherung und gegebenenfalls Verarbeitung der Sensordaten direkt auf dem Transponder 18.

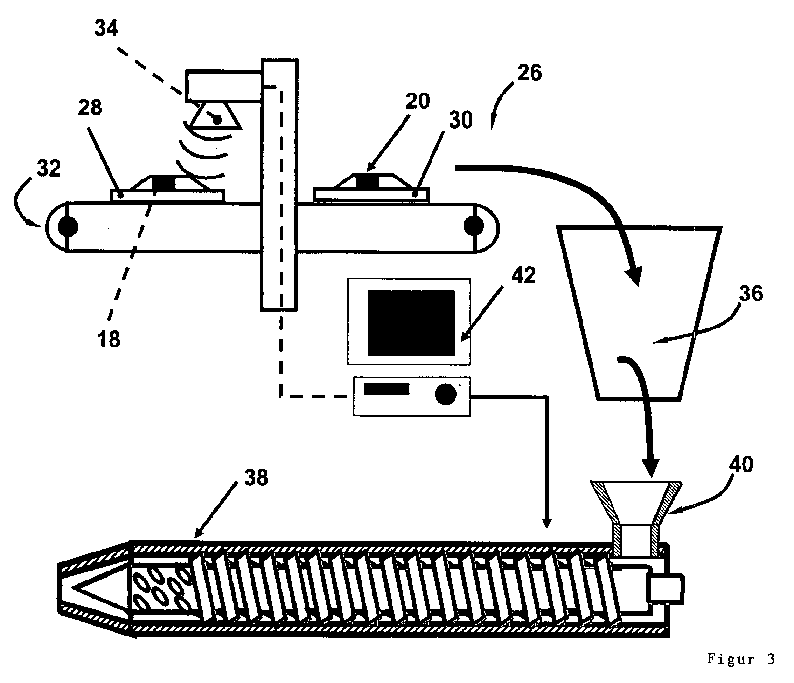

Das in Figur 3 gezeigte System 26 zur Bestimmung von Materialart und -zustand und zum Recyclen von mit Transpondern 18 bzw. 20 versehenen Bauteilen 28 und 30 aus zum Beispiel Polymer umfaßt eine Fördereinrichtung 32 in Form eines Förderbandes zum Fördern der Bauteile 28 und 30 an einer Ausleseeinrichtung 34 vorbei, wobei der Fördereinrichtung 32 ein Roboter für die Demontage von Fahrzeugen vorgeschaltet sein kann, sowie einen der Ausleseeinrichtung 34 nachgeschalteten Sammelbehälter 36 zum Sammeln der an der Ausleseeinrichtung 34 vorgeführten Bauteile 28 und 30 und eine Extruderschnecke 38 mit einer Zuführeinrichtung 40 sowie einen Prozeßrechner 42 für eine automatisierte Rezepterstellung. In der Ausleseeinrichtung 34 werden in den Speichereinrichtungen (nicht gezeigt) der Transponder, wie 18 und 20, gespeicherte Daten ausgelesen. Die ausgelesenen Daten umfassen Identifikationsdaten zur Identifizierung der Bauteile und Materialart der Bauteile und Lebenszyklusdaten der Bauteile. Sie werden jedoch nicht zur Sortierung der Bauteile verwendet. Es werden nämlich alle Bauteile nachfolgend in dem Sammelbehälter 36 gesammelt. Die ausgelesenen Daten werden jedoch vom Prozeßrechner 42 dazu verwendet, um automatisiert eine Rezepterstellung bei der Herstellung von neuen Produkten oder "Rohstoffen" vorzunehmen. Beispielsweise kann die automatisierte Rezepterstellung die Art der Verarbeitung und die Zugabe von gewissen Additiven umfassen.

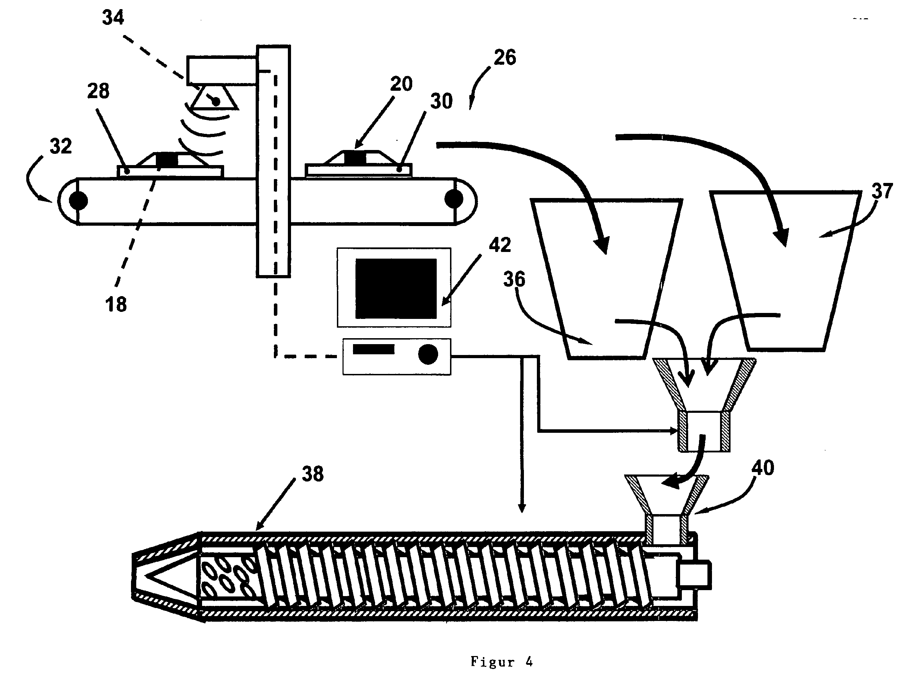

Das in Figur 4 gezeigte System 26 zur Bestimmung von Materialart und -zustand und zum Recyclen unterscheidet sich von der in Figur 3 gezeigten System darin, daß der Ausleseeinrichtung 34 in Förderrichtung eine Sortiereinrichtung, die lediglich durch die beiden Sammelbehälter 36 und 37 angedeutet ist, nachgeschaltet ist. Die Sortiereinrichtung dient jedoch nicht zum Ausscheiden eines Teils der Bauteile, sondern zur Sortierung der Bauteile anhand der ausgelesenen Daten und anhand Qualitätskriterien und nachfolgenden Dosierung der beiden Sortierfraktionen in den Sammelbehältern 36 und 37 auf der Grundlage der ausgelesenen Daten, wobei die Rezepterstellung in dem Prozeßrechner 42 automatisiert erfolgt.

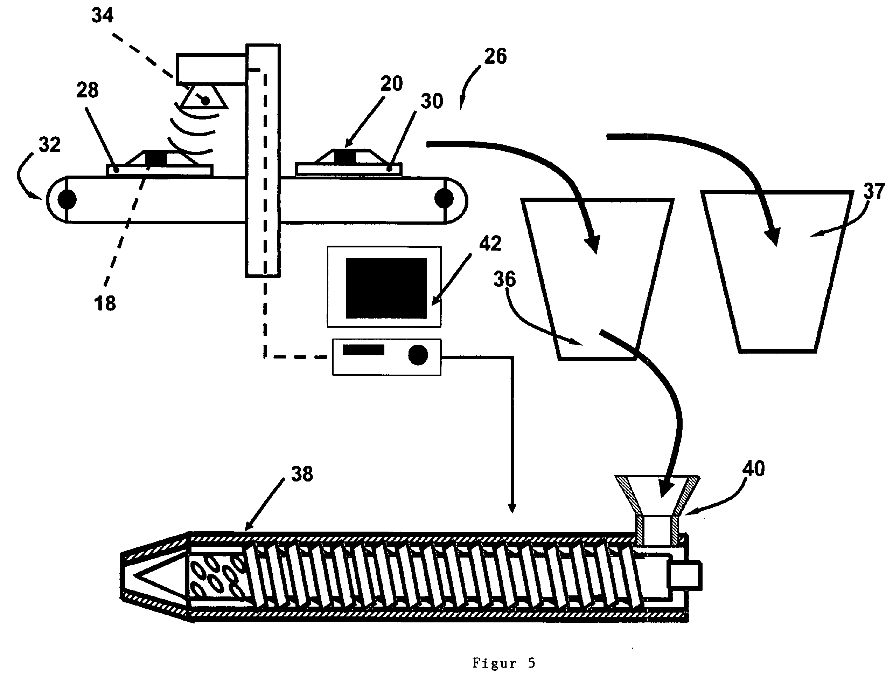

Das in Figur 5 gezeigte System 26 zur Bestimmung von Materialart und -zustand und zum Recyclen unterscheidet sich von der in Figur 4 gezeigten System darin, daß nur eine, nämlich in dem Sammelbehälter 36, der beiden Sortierfraktionen zur Herstellung eines neuen Produkts verwendet wird, wobei die Rezepterstellung dann wieder wie in Figur 3 erfolgt.

Grundsätzlich kann die Sortiereinrichtung über eine Datenleitung mit einer Datenbank verbunden sein, die Informationen über Bauteile und/oder deren Material enthält.

Eine Anlage zum Sortieren kann zum Beispiel einstufig oder zweistufig aussehen:
- Wenn eine robotergesteuerte Demontage des Fahrzeugs erfolgt, ist es möglich, die Ausleseeinrichtung in den Roboter zu integrieren. Die Steuerung des Roboters erfolgt auf der Basis der Information über das Bauteil und/oder Materialart und/oder Materialzustand, die vom Transponder ermittelt werden. Die Steuerung des Roboters muß so implementiert sein, daß der Roboter anhand der Daten entscheiden kann, für welche nachgeschaltete Weiterverarbeitungsstufe (Aufbereitungsstufe) das demontierte Bauteilmaterial geeignet ist.
- Wenn eine manuelle Demontage des Fahrzeugs erfolgt, wird eine separate Sortiereinrichtung eingesetzt. Die Sortierung erfolgt in gleichem Maße über die vom Transponder erhaltenen Daten. Über die in beispielsweise einem Prozeßrechner implementierten Entscheidungskriterien auf Basis der Daten wird dann gleichfalls eine sinnvolle Weiterverarbeitungsstufe (Aufbereitungsstufe) ausgewählt und das Bauteil über zum Beispiel ein Weichen- oder Manipulatorsystem in die geeignete anschließende Weiterverarbeitungsstufe (Aufbereitungsstufe) eingeschleust.

Alternativ zur Demontage kann Schreddern eingesetzt werden. Informationen, die im Transponder abgespeichert sind, werden vor dem Schreddern ausgelesen. Diese Informationen können zur Kunststofferkennung und Zustandsprüfüng genutzt werden.

Die Weiterverarbeitung bzw. Aufbereitung des Materials, zum Beispiel Kunststoffes, kann nicht nur physikalisch, wie zum Beispiel durch Mischen, erfolgen, sondern auch durch chemische Aufbereitungsprozesse.

Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausfiihrungsformen wesentlich sein.

## Patentansprüche

1. Verfahren zur Bestimmung von Materialart und -zustand eines Bauteils (28, 30) aus einem recyclebarem Material, insbesondere aus einem polymerem Material, Polymergemisch, Copolymerisat, biologisch abbaubarem Polymerwerkstoff oder einem Werkstoff auf Basis von mindestens einem nachwachsenden Rohstoff, von einem Fahrzeug (10), insbesondere Kraftfahrzeug, Flugzeug oder Schiff, das die Schritte umfaßt:
- Versehen von genanntem Fahrzeug (10) mit mindestens einer Sensoreinrichtung (14, 16) zur Erfassung von mindestens einem der Parameter Feuchtigkeit, Temperatur und UV-Licht während des Lebenszyklus von genanntem Bauteil (28, 30) und Versehen von genanntem Bauteil (28, 30) mit einem Transponder (18, 20) mit einer beschreibbaren und auslesbaren Speichereinrichtung, wobei genannte Speichereinrichtung Identifikationsdaten zur Identifizierung von genanntem Bauteil (28, 30) und/oder Materialart von genanntem Bauteil (28, 30) enthält und genannter Transponder (18, 20) gestaltet ist, um von genannter mindestens einen Sensoreinrichtung (14, 16) über eine Kommunikationseinrichtung direkt oder indirekt Sensordaten zu empfangen,
- nach gegebenenfalls erforderlicher Verarbeitung Speichern von genannten Sensordaten in genannter Speichereinrichtung von genanntem Transponder (18, 20) von genanntem Fahrzeug (10), und
- drahtloses Auslesen der Identifikationsdaten und der gegebenenfalls verarbeiteten Sensordaten aus genannter Speichereinrichtung mittels einer Ausleseeinrichtung (34) und Bestimmen des Materialzustands von genanntem Bauteil (28, 30) mittels einer Materialzustandsbestimmungseinrichtung unter Verwendung der ausgelesenen Identifikations- und Sensordaten.

2. Verfahren nach Anspruch 1, **dadurch gekennzeichnet, daß** genannte Sensordaten in einer On-Board-Unit (12) des Fahrzeugs (10) zwischengespeichert und vor oder nach der Zwischenspeicherung verarbeitet werden sowie zeit-, ereignis- oder abfragegesteuert nachfolgend über genannte Kommunikationseinrichtung zu genanntem Transponder (18, 20) übertragen werden.

3. Verfahren nach Anspruch 1, **dadurch gekennzeichnet, daß** genannte Sensordaten direkt in genannter Speichereinrichtung von genanntem Transponder (18, 20) gespeichert und vor oder nach der Speicherung verarbeitet werden.

4. Verfahren nach Anspruch 3, **dadurch gekennzeichnet, daß** genannte Identifikationsdaten und genannte Sensordaten zeit-, ereignis- oder abfragegesteuert mittels der Ausleseeinrichtung (34) ausgelesen werden.

5. Verfahren nach einem der vorangehenden Ansprüche, **dadurch gekennzeichnet, daß** zum Bestimmen des Materialzustands von der Materialzustandsbestimmungseinrichtung zusätzlich Informationen über genanntes Bauteil (28, 30) und/oder Materialart von genanntem Bauteil (28, 30) von einer Datenbank abgefragt werden, in der genannte Informationen hinterlegt sind.

6. Verfahren nach einem der vorangehenden Ansprüche, **dadurch gekennzeichnet, daß** genannter mindestens eine Parameter kontinuierlich oder zeit-, ereignis- oder abfragegesteuert erfaßt wird.

7. Verfahren nach einem der vorangehenden Ansprüche, **dadurch gekennzeichnet, daß** es ferner umfaßt
Erzeugen eines Sortierbefehls für genanntes Bauteil auf der Grundlage von bestimmter Materialart und bestimmtem Materialzustand und vorgebbaren Qualitätskriterien.

8. Verfahren nach Anspruch 7, **dadurch gekennzeichnet, daß** zum Bestimmen von Materialart und -zustand zusätzliche Informationen über genanntes Bauteil (28, 30) und/oder Materialart von genanntem Bauteil (28, 30) von einer Datenbank abgefragt werden, in der genannte Informationen hinterlegt sind.

9. Verfahren nach Anspruch 7 oder 8, **dadurch gekennzeichnet, daß** das Bauteil (28, 30) mittels einer Fördereinrichtung (32) an einer Ausleseeinrichtung (34) zum Auslesen von genannten Identifikations- und Lebenszyklusdaten vorbeigeführt wird.

10. Verfahren nach einem der Ansprüche 7 bis 9, **dadurch gekennzeichnet, daß** es ferner umfaßt:
- Sortieren mehrerer Bauteile nach vorgebbaren Qualitätskriterien von mindestens zwei Sortierfraktionen, und
- Weiterverarbeiten zumindest einer Sortierfraktion auf der Grundlage von bestimmter Materialart und bestimmtem Materialzustand.

11. Verfahren nach Anspruch 10, **dadurch gekennzeichnet, daß** nur eine Sortierfraktion gegebenenfalls unter zusätzlicher Verwendung von neuem Material weiterverarbeitet wird.

12. Verfahren nach Anspruch 10, **dadurch gekennzeichnet, daß** mindestens zwei Sortierfraktionen gegebenenfalls unter zusätzlicher Verwendung von neuem Material weiterverarbeitet werden, wobei die jeweiligen Dosen der Sortierfraktionen auf der Grundlage von jeweils bestimmter Materialart und bestimmtem Materialzustand bestimmt werden.

13. Verfahren nach einem der vorangehenden Ansprüchen, **dadurch gekennzeichnet, daß** es ferner umfaßt:
Weiterverarbeiten des Bauteilens bzw. der Bauteile (28, 30) auf der Grundlage der bestimmten Materialart(en) und bestimmten Materialzustände.

14. Fahrzeug (10), insbesondere Kraftfahrzeug, Flugzeug oder Schiff, umfassend:
- mindestens ein Bauteil (28, 30) aus einem recyclebarem Material, insbesondere aus einem polymerem Material, Polymergemisch, Copolymerisat, biologisch abbaubarem Polymerwerkstoff oder einem Werkstoff auf Basis von mindestens einem nachwachsenden Rohstoff, das mit einem Transponder (18, 20) mit einer beschreibbaren und auslesbaren Speichereinrichtung versehen ist, die Identifikationsdaten zur Identifizierung von genanntem Bauteil (28, 30) und/oder Materialart von genanntem Bauteil (28, 30) enthält, und
- mindestens eine Sensoreinrichtung zur Erfassung von mindestens einem der Parameter Feuchtigkeit, Temperatur oder UV-Licht während des Lebenszyklus von genanntem mindestens einen Bauteil (28, 30), wobei genannter Transponder (18, 20) gestaltet ist, um von genannter mindestens einen Sensoreinrichtung über eine Kommunikationseinrichtung direkt oder indirekt Sensordaten zu empfangen.

15. Fahrzeug (10) nach Anspruch 14, **dadurch gekennzeichnet, daß** eine On-Board-Unit (12) vorgesehen ist, die gestaltet ist, um genannte Sensordaten zwischenzuspeichern und vor oder nach der Zwischenspeicherung zu verarbeiten sowie zeit-, ereignis- oder abfragegesteuert über genannte Kommunikationseinrichtung zu genanntem Transponder (18, 20) zu übertragen.

16. Fahrzeug (10) nach Anspruch 14, **dadurch gekennzeichnet, daß** der Transponder (18, 20) gestaltet ist, um genannte Sensordaten direkt in genannter Speichereinrichtung von genanntem Transponder (18, 20) zu speichern und vor oder nach der Speicherung zu verarbeiten.

17. Fahrzeug (10) nach einem der Ansprüche 14 bis 16, **dadurch gekennzeichnet, daß** genannte Sensoreinrichtung gestaltet ist, um genannten mindestens einen Parameter kontinuierlich oder zeit-, ereignis- oder abfragegesteuert zu erfassen.

18. System zur Bestimmung von Materialart und -zustand von Bauteilen (28, 30) aus einem recyclebaren Material, insbesondere aus einem polymerem Material, Polymergemisch, Copolymerisat, biologisch abbaubarem Polymerwerkstoff oder einem Werkstoff auf Basis von mindestens einem nachwachsenden Rohstoff, von einem Fahrzeug (10), insbesondere Kraftfahrzeug, Flugzeug oder Schiff, umfassend:
- einen an einem Bauteil (28, 30) eines Fahrzeugs angebrachten Transponder (18, 20) mit einer beschreibbaren und auslesbaren Speichereinrichtung, die Identifikationsdaten zur Identifizierung von genanntem Bauteil und/oder Materialart von genanntem Bauteil enthält,
- mindestens eine an dem Fahrzeug vorgesehene Sensoreinrichtung zur Erfassung von mindestens einem der Parameter Feuchtigkeit, Temperatur oder UV-Licht während des Lebenszyklus von genanntem mindestens einen Bauteil (28, 30), wobei genannter Transponder (18, 20) gestaltet ist, um von genannter mindestens einen Sensoreinrichtung über eine Kommunikationseinrichtung direkt oder indirekt Sensordaten zu empfangen,
- mindestens eine Ausleseeinrichtung (34) zum drahtlosen Auslesen der Identifikationsdaten zum Identifizieren von einem Bauteil (28, 30) und/oder Materialart von genanntem Bauteil (28, 30) und der gegebenenfalls verarbeiteten Sensordaten aus genannter Speichereinrichtung, und
- mindestens eine mit genannter Ausleseeinrichtung (34) in Verbindung stehende Materialzustandsbestimmungseinrichtung zum Bestimmen der Materialart und des Materialzustands von genanntem Bauteil (28, 30) unter Verwendung der von genannter Ausleseeinrichtung (34) ausgelesenen Identifikations- und Sensordaten.

19. System nach Anspruch 18, **dadurch gekennzeichnet, daß** genannte Ausleseeinrichtung (34) gestaltet ist, um genannte Identifikations- und Sensordaten zeit-, ereignis- oder abfragegesteuert auszulesen.

20. System nach Anspruch 18 oder 19, **dadurch gekennzeichnet, daß** es eine Datenbank umfaßt, in der Informationen über Bauteile (28, 30) und/oder Materialarten der Bauteile (28, 30) gespeichert sind sowie von der Materialzustandsbestimmungseinrichtung abfragbar sind.

21. System nach einem der Ansprüche 18 bis 20, **dadurch gekennzeichnet, daß** es ferner umfaßt:
eine Sortierbefehlerzeugungseinrichtung zum Erzeugen eines Sortierbefehls an eine Sortiereinrichtung auf der Grundlage von bestimmter Materialart und bestimmtem Materialzustand und vorgebbaren Qualitätskriterien.

22. System nach Anspruch 21, **dadurch gekennzeichnet, daß** eine Fördereinrichtung (32) zum Fördern mindestens eines genannten Bauteils (28, 30) an genannter Ausleseeinrichtung (34) vorbei vorgesehen ist.

23. System nach Anspruch 21 oder 22, **dadurch gekennzeichnet, daß** eine Sortiereinrichtung zum Sortieren der Bauteile (28, 30) vorgesehen ist.

24. System nach einem der Ansprüche 21 bis 23, **dadurch gekennzeichnet, daß** es ferner umfaßt:
eine Rezepterstellungseinrichtung zur automatisierten Rezepterstellung für die Weiterverarbeitung einer Sortierfraktion mit neuem Material oder von mindestens zwei Sortierfraktionen und gegebenenfalls neuem Material auf der Grundlage von bestimmter Materialart und bestimmtem Materialzustand.

25. System nach einem der Ansprüche 18 bis 20, **dadurch gekennzeichnet, daß** es ferner umfaßt:
eine Rezepterstellungseinrichtung zur automatisierten Rezepterstellung für die Weiterverarbeitung von genannten Bauteilen (28, 30) gegebenenfalls unter zusätzlicher Verwendung von neuem Material auf der Grundlage der bestimmten Materialart(en) und bestimmten Materialzustände.

26. System nach Anspruch 25, **dadurch gekennzeichnet, daß** eine Fördereinrichtung (32) zum Fördern von genannten Bauteilen (28, 30) an genannter Ausleseeinrichtung (34) vorbei vorgesehen ist.

## Claims

1. Method for determining the type and state of the material of a component (28, 30) comprising a recyclable material, in particular comprising a polymeric material, polymer mixture, copolymer, biologically degradable polymer material or a material based on at least one renewable primary product, of a vehicle (10), in particular a motor vehicle, aircraft or ship, which method comprises the steps of:
- providing said vehicle (10) with at least one sensor device (14, 16) for detecting at least one of the following parameters: moisture, temperature and UV light during the life cycle of the said component (29, 30), and providing the said component (28, 30) with a transponder (18, 20) with a writable and readable memory device, with the said memory device containing identification data for identifying the said component (28, 30) and/or the type of material of the said component (28, 30), and the said transponder (18, 20) being designed to directly or indirectly receive sensor data from the said at least one sensor device (14, 16) via a communication device,
- storing the said sensor data in the said memory device of the said transponder (18, 20) of the said vehicle (10) after any processing which may be required, and
- wire-free reading of the identification data and the possibly processed sensor data from the said memory device by means of a reading device (34), and determining the state of the material of the said component (28, 30) by means of a material state determining device using the read identification and sensor data.

2. Method according to Claim 1, **characterized in that** the said sensor data is temporarily stored in an on-board unit (12) of the vehicle (10) and is processed before or after the temporary storage and is subsequently transmitted to the said transponder (18, 20) via the said communication device in a time-, event- or request-controlled manner.

3. Method according to Claim 1, **characterized in that** the said sensor data is stored directly in the said memory device of the said transponder (18, 20) and is processed before or after storage.

4. Method according to Claim 3, **characterized in that** the said identification data and the said sensor data are read by means of the reading device (34) in a time-, event- or request-controlled manner.

5. Method according to one of the preceding claims, **characterized in that** information about the said component (28, 30) and/or the type of material of the said component (28, 30) is additionally requested from a database in which the said information is stored, in order for the material state determining device to determine the state of the material.

6. Method according to one of the preceding claims, **characterized in that** the said at least one parameter is detected continuously or in a time-, event- or request-controlled manner.

7. Method according to one of the preceding claims, **characterized in that** it further comprises
generating a sorting command for the said component on the basis of the determined type of material and the determined state of the material and predefinable quality criteria.

8. Method according to Claim 7, **characterized in that** additional information about the said component (28, 30) and/or the type of material of the said component (28, 30) is requested from a database in which the said information is stored, in order to determine the type and state of the material.

9. Method according to Claim 7 or 8, **characterized in that** the component (28, 30) is led past a reading device (34) by means of a conveyor device (32) in order to read the said identification and life cycle data.

10. Method according to one of Claims 7 to 9,
**characterized in that** it further comprises:
- sorting a plurality of components in accordance with predefinable quality criteria of at least two sorting fractions, and
- further processing at least one sorting fraction on the basis of the determined type of material and the determined state of the material.

11. Method according to Claim 10, **characterized in that** only one sorting fraction is further processed, possibly with the additional use of a new material.

12. Method according to Claim 10, **characterized in that** at least two sorting fractions are further processed, possibly with the additional use of a new material, with the respective doses of the sorting fractions being determined on the basis of the respectively determined type of material and the determined state of the material.

13. Method according to one of the preceding claims, **characterized in that** it further comprises:
further processing the component or the components (28, 30) on the basis of the determined type(s) of material and determined states of the material.

14. Vehicle (10), in particular motor vehicle, aircraft or ship, comprising
- at least one component (28, 30) comprising a recyclable material, in particular comprising a polymeric material, polymer mixture, copolymer, biologically degradable polymer material or a material based on at least one renewable primary product, which component is provided with a transponder (18, 20) with a writable and readable memory device which contains identification data for identifying the said component (29, 30) and/or the type of material of the said component (28, 30), and
- at least one sensor device for detecting at least one of the following parameters: moisture, temperature and UV light during the life cycle of the said at least one component (28, 30), with the said transponder (18, 20) being designed to directly or indirectly receive sensor data from the said at least one sensor device via a communication device.

15. Vehicle (10) according to Claim 14, **characterized in that** an on-board unit (12) is provided which is designed to temporarily store the said sensor data and to process the sensor data before or after the temporary storage, and to transmit the said sensor data to the said transponder (18, 20) via the said communication device in a time-, event- or request-controlled manner.

16. Vehicle (10) according to Claim 14, **characterized in that** the transponder (18, 20) is designed to store the said sensor data directly in the said memory device of the said transponder (18, 20) and to process the said sensor data before or after the storage.

17. Vehicle (10) according to one of Claims 14 to 16, **characterized in that** the said sensor device is designed to detect the said at least one parameter continuously or in a time-, event- or request-controlled manner.

18. System for determining the type and state of the material of components (28, 30) comprising a recyclable material, in particular comprising a polymeric material, polymer mixture, copolymer, biologically degradable polymer material or a material based on at least one renewable primary product, of a vehicle (10), in particular a motor vehicle, aircraft or ship, comprising:
- a transponder (18, 20) which is fitted to a component (28, 30) of a vehicle and has a writable and readable memory device which contains identification data for identifying the said component and/or the type of material of the said component,
- at least one sensor device, which is provided on the vehicle, for detecting at least one of the following parameters: moisture, temperature and UV light during the life cycle of the said at least one component (28, 30), with the said transponder (18, 20) being designed to directly or indirectly receive sensor data from the said at least one sensor device via a communication device,
- at least one reading device (34) for wire-free reading of the identification data for identifying a component (28, 30) and/or the type of material of the said component (28, 30) and the possibly processed sensor data from the said memory device, and
- at least one material state determining device, which is connected to the said reading device (34), for determining the type of material and the state of the material of the said component (28, 30) using the identification and sensor data read by the said reading device (34).

19. System according to Claim 18, **characterized in that** the said reading device (34) is designed to read the said identification and sensor data in a time-, event- or request-controlled manner.

20. System according to Claim 18 or 19, **characterized in that** it comprises a database in which information about components (28, 30) and/or types of material of the components (28, 30) is stored and can be requested by the material state determining device.

21. System according to one of Claims 18 to 20,
**characterized in that** it further comprises:
a sorting command generating device for generating a sorting command on a sorting device on the basis of the determined type of material and the determined state of the material and predefinable quality criteria.

22. System according to Claim 21, **characterized in that** a conveyor device (32) is provided for conveying at least one of the said components (28, 30) past the said reading device (34).

23. System according to Claim 21 or 22, **characterized in that** a sorting device is provided for sorting the components (28, 30).

24. System according to one of Claims 21 to 23,
**characterized in that** it further comprises:
a formulation creating device for automatically creating a formulation for further processing a sorting fraction with a new material or at least two sorting fractions and possibly new material on the basis of the determined type of material and the determined state of the material.

25. System according to one of Claims 18 to 20,
**characterized in that** it further comprises:
a formulation creating device for automatically creating a formulation for further processing the said components (28, 30), possibly with the additional use of a new material, on the basis of the determined type(s) of material and the determined states of the material.

26. System according to Claim 25, **characterized in that** a conveyor device (32) is provided for conveying the said components (28, 30) past the said reading device (34).

## Revendications

1. Procédé de détermination de l'état et du type d'un élément de construction (28, 30) formé d'un matériau recyclable, en particulier d'un matériau polymère, d'un mélange de polymères, d'un copolymérisat, d'un matériau polymère dégradable biologiquement, ou d'un matériau à base d'au moins une matière première régénérable, depuis un véhicule (10), en particulier un véhicule automobile, un avion ou un navire, comprenant les étapes ci-après :
- équipement dudit véhicule (10) avec au moins un dispositif à capteur (14, 16), pour détecter au moins l'un des paramètres que sont l'humidité, la température et la lumière UV, pendant le cycle de vie dudit élément de construction (28, 30), et équipement dudit élément de construction (28, 30) avec un transpondeur (18, 20) muni d'un dispositif à mémoire à possibilité de lecture et d'écriture, ledit dispositif à mémoire contenant des données d'identification, pour identifier ledit élément de construction (28, 30) et/ou le type de matériau dudit élément de construction (28, 30), et ledit transpondeur (18, 20) étant configuré pour recevoir, directement ou indirectement, des données de capteur, provenant dudit au moins un dispositif à capteur (14, 16), par l'intermédiaire d'un dispositif de communication,
- après traitement, le cas échéant nécessaire, mémorisation desdites données de capteur dans ledit dispositif à mémoire dudit transpondeur (18, 20), depuis ledit véhicule (10), et
- lecture sans fil des données d'identification et des données de capteur le cas échéant traitées, à partir dudit dispositif à mémoire, au moyen d'un dispositif de lecture (34), et détermination de l'état du matériau dudit transpondeur (18, 20) dudit élément de construction (28, 30), au moyen d'un dispositif de détermination de l'état d'un matériau, avec utilisation des données d'identification et de capteur ayant été lues.

2. Procédé selon la revendication 1, **caractérisé en ce que** lesdites données de capteur sont mises en stockage intermédiaire dans une unité On-Board (12) du véhicule (10) et traitées, avant ou après la mise en stockage intermédiaire, ainsi que transmises ensuite audit transpondeur (18, 20), sous une commande temporelle, événementielle ou interrogationnelle, par l'intermédiaire dudit dispositif de communication.

3. Procédé selon la revendication 1, **caractérisé en ce que** lesdites données de capteur sont mémorisées et traitées, avant ou après le stockage, dans ledit dispositif à mémoire dudit transpondeur (18, 20).

4. Procédé selon la revendication 3, **caractérisé en ce que** lesdites données d'identification et lesdites données de capteur sont lues, sous une commande temporelle, événementielle ou interrogationnelle, au moyen du dispositif de lecture (34).

5. Procédé selon l'une des revendications précédentes, **caractérisé en ce que**, pour faire déterminer l'état du matériau par le dispositif de détermination de l'état du matériau, des informations sur ledit élément de construction (28, 30) et/ou le type de matériau dudit élément de construction (28, 30) sont en plus demandées auprès d'une banque de données, dans laquelle lesdites informations sont stockées.

6. Procédé selon l'une des revendications précédentes, **caractérisé en ce que** ledit au moins un paramètre est détecté de façon continue, ou sous une commande temporelle, événementielle ou interrogationnelle.

7. Procédé selon l'une des revendications précédentes, **caractérisé en ce qu'**il comprend en outre :
la génération d'un ordre de tri pour ledit élément de construction, sur la base d'un type de matériau déterminé et d'un état de matériau déterminé et de critères de qualité susceptibles d'être prédéterminés.

8. Procédé selon la revendication 7, **caractérisé en ce que**, pour faire déterminer le type du matériau et l'état du matériau, des informations supplémentaires sur ledit élément de construction (28, 30) et/ou le type de matériau dudit élément de construction (28, 30) sont demandées auprès d'une banque de données, dans laquelle lesdites informations sont stockées.

9. Procédé selon la revendication 7 ou 8, **caractérisé en ce que** l'élément de construction (28, 30) est passé, au moyen d'un dispositif de transport (32), sur un dispositif de lecture (34), pour lire lesdites données d'identification et de cycle de vie.

10. Procédé selon l'une des revendications 7 à 9,
**caractérisé en ce qu'**il comprend en outre :
- le tri de plusieurs éléments de construction selon des critères de qualité, susceptibles d'être prédéterminés, d'au moins deux fractions de tri, et
- le retraitement d'au moins une fraction de tri, sur la base d'un type de matériau déterminé et d'un état de matériau déterminé.

11. Procédé selon la revendication 10, **caractérisé en ce qu'**une seule fraction de tri est retraitée, le cas échéant avec utilisation supplémentaire de matériau neuf.

12. Procédé selon la revendication 10, **caractérisé en ce qu'**au moins deux fractions de tri sont retraitées, le cas échéant avec utilisation supplémentaire de matériau neuf, les doses respectives des fractions de tri étant déterminée sur la base chaque fois d'un type de matériau déterminé et d'un état de matériau déterminé.

13. Procédé selon l'une des revendications précédentes, **caractérisé en ce qu'**il comprend en outre :
le retraitement de l'élément de construction ou des éléments de construction (28, 30), sur la base du ou des type(s) de matériau déterminés et des états de matériau déterminés.

14. Véhicule (10), en particulier un véhicule automobile, un avion ou un navire, comprenant :
- au moins un élément de construction (28, 30) formé d'un matériau recyclable, en particulier d'un matériau polymère, d'un mélange de polymères, d'un copolymérisat, d'un matériau polymère dégradable biologiquement, ou d'un matériau à base d'au moins une matière première régénérable, équipé d'un transpondeur (18, 20) muni d'un dispositif à mémoire permettant une écriture et une lecture, contenant des données d'identification, pour identifier ledit élément de construction (28, 30) et/ou le type de matériau dudit élément de construction (28, 30), et
- au moins un dispositif à capteur, pour détecter au moins l'un des paramètres que sont l'humidité, la température ou la lumière UV, pendant le cycle de vie dudit au moins un élément de construction (28, 30), ledit transpondeur (18, 20) étant configuré pour recevoir, directement ou indirectement, des données de capteur, provenant dudit au moins un dispositif à capteur, par l'intermédiaire d'un dispositif de communication.

15. Véhicule (10) selon la revendication 14, **caractérisé en ce qu'**une unité On-Board (12) est prévue, pour mettre en stockage intermédiaire lesdites données de capteur et les traiter, avant ou après la mise en stockage intermédiaire, et les transmettre audit transpondeur (18, 20), sous une commande temporelle, événementielle ou interrogationnelle, par l'intermédiaire dudit dispositif de communication.

16. Véhicule (10) selon la revendication 14, **caractérisé en ce que** le transpondeur (18, 20) est configuré pour faire mémoriser par ledit transpondeur (18, 20) lesdites données de capteur, directement dans ledit dispositif à mémoire, et les traiter, avant ou après la mise en stockage intermédiaire.

17. Véhicule (10) selon l'une des revendications 14 à 16, **caractérisé en ce que** ledit dispositif à capteur est configuré pour détecter ledit au moins un paramètre, de façon continue, ou sous une commande temporelle, événementielle ou interrogationnelle.

18. Système de détermination de l'état et du type d'un élément de construction (28, 30) formé d'un matériau recyclable, en particulier d'un matériau polymère, d'un mélange de polymères, d'un copolymérisat, d'un matériau polymère dégradable biologiquement, ou d'un matériau à base d'au moins une matière première régénérable, depuis un véhicule (10), en particulier un véhicule automobile, un avion ou un navire, comprenant les étapes ci-après :
- un transpondeur (18, 20), monté sur un élément de construction (28, 30) d'un véhicule, avec un dispositif à mémoire à possibilité de lecture et d'écriture, contenant des données d'identification, pour identifier ledit élément de construction et/ou le type de matériau dudit élément de construction,
- au moins un dispositif à capteur, prévu sur le véhicule, pour détecter au moins l'un des paramètres que sont l'humidité, la température et la lumière UV, pendant le cycle de vie dudit élément de construction (28, 30), ledit transpondeur (18, 20) étant configuré pour recevoir, directement ou indirectement, des données de capteur, provenant dudit au moins un dispositif à capteur, par l'intermédiaire d'un dispositif de communication
- au moins un dispositif de lecture (34), pour lire sans fil les données d'identification, afin d'identifier, à partir dudit dispositif à mémoire, un élément de construction (28, 30) et/ou un type de matériau dudit élément de construction (28, 30), et des données de capteur, le cas échant traitées,
- au moins un dispositif de détermination de l'état du matériau, relié audit dispositif de lecture (34), pour déterminer le type de matériau et l'état du matériau dudit élément de construction (28, 30),en utilisant les données d'identification et de capteur lues par ledit dispositif de lecture (34).

19. Système selon la revendication 18, **caractérisé en ce que** ledit dispositif de lecture (34) est configuré pour lire lesdites données d'identification et de capteur, sous une commande temporelle, événementielle ou interrogationnelle.

20. Système selon la revendication 18 ou 19, **caractérisé en ce qu'**il comprend une banque de données, dans laquelle des informations sur des éléments de construction (28, 30) et/ou des types de matériau desdits éléments de construction (28, 30) sont stockées et sont susceptibles d'être demandées par le dispositif de détermination de l'état du matériau.

21. Système selon l'une des revendications 18 à 20,
**caractérisé en ce qu'**il comprend en outre :
un dispositif de génération d'ordres de tri, pour générer un ordre de tri appliqué à un dispositif de tri, sur la base d'un type de matériau déterminé et d'un état de matériau déterminé et de critères de qualité susceptibles d'être prédéterminés.

22. Système selon la revendication 21, **caractérisé en ce qu'**un dispositif de transport (32) est prévu, pour transporter au moins un dit élément de construction (28, 30), en passant audit dispositif de lecture (34).

23. Système selon la revendication 21 ou 22, **caractérisé en ce qu'**un dispositif de tri est prévu, pour trier les éléments de construction (28, 30).

24. Système selon l'une des revendications 21 à 23,
**caractérisé en ce qu'**il comprend en outre :
un dispositif d'établissement de protocole, pour établir automatiquement un protocole pour le retraitement d'une fraction de tri avec du matériau neuf, ou au moins deux fractions de tri et, le cas échéant, du matériau neuf, sur la base d'un type de matériau déterminé et d'un état de matériau déterminé.

25. Système selon l'une des revendications 18 à 20,
**caractérisé en ce qu'**il comprend en outre :
un dispositif d'établissement de protocole, pour établir automatiquement un protocole pour le retraitement desdits éléments de construction (28, 30), le cas échéant avec utilisation supplémentaire de matériau neuf, sur la base du ou des types(s) de matériau déterminés et des états de matériau déterminés.
d'une fraction de tri avec du matériau neuf, ou au moins deux fractions de tri et, le cas échéant, du matériau neuf, sur la base d'un type de matériau déterminé et d'un état de matériau déterminé.

26. Système selon la revendication 25, **caractérisé en ce qu'**un dispositif de transport (32) est prévu, pour le transport desdits éléments de construction (28, 30), en passant audit dispositif de lecture (34).
